# EUROPÄISCHE PATENTSCHRIFT

(11) **EP 0 634 293 B1**
(45) Veröffentlichungstag und Bekanntmachung des Hinweises auf die Patenterteilung: **19.02.1997**
(21) Anmeldenummer: 94108845.2
(22) Anmeldetag: 09.06.1994
(51) Int. Cl.: B41N 3/00

(54) **Verfahren und Vorrichtung zur Reparatur von Zylindern von Druckmaschinen**
Process and apparatus for the repair of printing machine cylinders
Procédé et dispositif pour la réparation des cylindres d'une machine d'impression

(30) Priorität: 17.06.1993 DE 4320069
(43) Veröffentlichungstag der Anmeldung: 18.01.1995
(73) Patentinhaber: MAN Roland Druckmaschinen AG, 63012 Offenbach (DE)
(72) Erfinder: Sailer, Colin, Dr., D-86150 Augsburg (DE); Harmathy, Paul, Dr., D-80639 München (DE); Tusché, Eckhard, D-86399 Bobingen (DE); Weissbacher, Thomas, D-86356 Neusäss (DE); Schoder, Heinrich, D-86570 Inchenhofen (DE); Bachmeir, Xaver, D-86154 Augsburg (DE); Ruschkowski, Johannes, D-86199 Augsburg (DE)
(74) Vertreter: Schober, Stefan

(56) Entgegenhaltungen:
- DE-A- 3 814 021
- DER POLYGRAPH, Nr.9, 1988 Seiten 807 - 810 ADOLF BETZ 'Tampongalvanisieren - ein Reparaturverfahren für zylindrische Bauteile'

## Beschreibung

Die Erfindung betrifft ein Verfahren und eine Vorrichtung zur Reparatur von Zylindern von Druckmaschinen, insbesondere von Formzylindern, durch thermische Spritzbeschichtung.

Eine glatte, zylindrische Oberfläche von Zylindern von Druckmaschinen ist die Voraussetzung für eine hohe Qualität der mit diesen Maschinen hergestellten Druckerzeugnisse. Die Oberfläche der Zylinder kann mechanisch, beispielsweise durch das Überrollen von harten Fremdkörpern, durch chemische Korossion, durch Verschleiß oder anderweitig zerstört werden.

Zur Reparatur derartiger Zylinderflächen wird im Fachartikel BETZ, Adolf: Tampongalvanisieren - ein Reparaturverfahren für zylindrische Bauteile. In: Der Polygraph, 1988, Nr. 9, Seite 807 und 810 das Tampongalvanisieren empfohlen. Damit lassen sich jedoch nur lokale Schadstellen reparieren.

Die Erfindungsbeschreibung DD 206 905 schlägt zur Zylinderreparatur eine epoxidhaltige Formmasse vor, mit der Zylinderschadstellen auszuspachteln sind, aber auch mit dieser Methode sind nur lokale Reparaturen möglich.

Eine ganzflächige Reparatur ist beispielsweise durch thermisches Spritzen möglich. Jedoch wird hierfür der Zylinder aus der Druckmaschine ausgebaut, was die Reparatur sehr verteuert.

Aufgabe der Erfindung ist es, ein kostengünstiges Verfahren und eine Vorrichtung zur auch ganzflächigen Oberflächenreparatur von Druckmaschinenzylindern durch thermische Spritzbeschichtung zu schaffen.

Diese Aufgabe wird erfindungsgemäß durch ein Verfahren mit den Merkmalen des Patentanspruchs 1 und durch eine Vorrichtung mit den kennzeichnenden Merkmalen des Patentanspruchs 16 gelöst. Die Erfindung erspart den Ausbau des zu reparierenden Zylinders aus der Druckmaschine, ggf. seinen Transport in die Reparaturwerkstatt sowie seinen Wiedereinbau. Die Reparatur ist dadurch kostengünstig und zeitsparend möglich.

Weitere Merkmale und Vorteile ergeben sich aus den Unteransprüchen in Verbindung mit der Beschreibung.

Die Erfindung soll nachfolgend an einigen Ausführungsbeispielen näher erläutert werden. In den zugehörigen Zeichnungen zeigen:

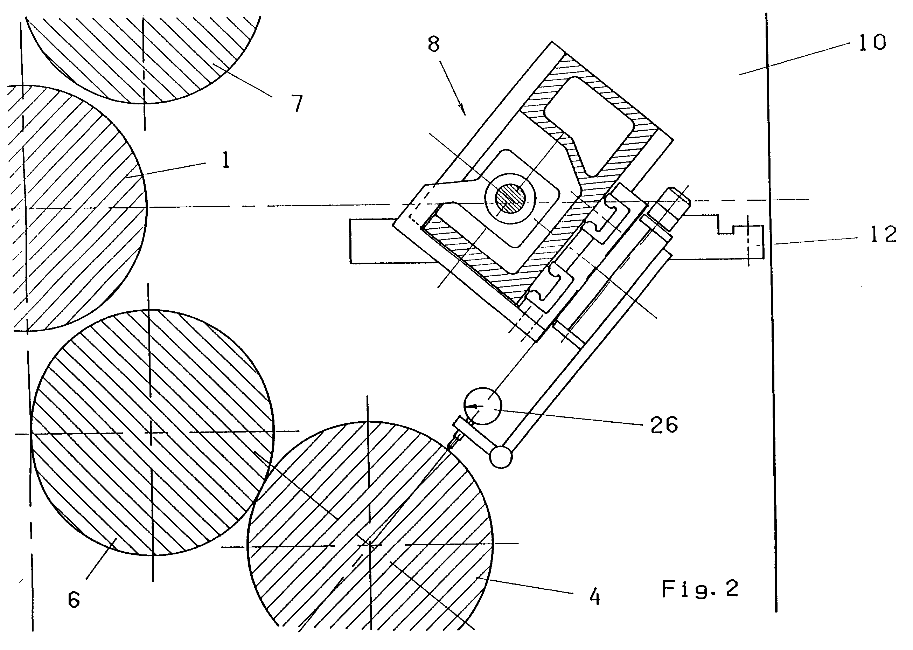

- Fig. 1 und 2: die Seitenansicht der Kreuzschlittentraverse bei der Justage,
- Fig. 3: die Ansicht der Kreuzschlittentraverse bei der Justage,
- Fig. 4: die Kreuzschlittentraverse mit Schleifscheibe, ohne Absaugung dargestellt,
- Fig. 5: den Schnitt V-V nach Fig. 4,
- Fig. 6: eine Anstellvariante zu Fig. 5,
- Fig. 7: eine Teildarstellung der Kreuzschlittentraverse mit Dreheinrichtung
- Fig. 8: eine Teildarstellung der Kreuzschlittentraverse mit Sandstrahleinrichtung,
- Fig. 9: die Kreuzschlittentraverse mit Kanalbearbeitungswerkzeug,
- Fig. 10: eine Teildarstellung der Kreuzschlittentraverse mit Spritzpistole,
- Fig. 11: eine Teildarstellung der Kreuzschlittentraverse mit Glättvorrichtung,
- Fig. 12: an einen Formzylinder angestellte UV-Lampen,
- Fig. 13: eine Antriebsvariante für einen Formzylinder,
- Fig. 14: den Schnitt XIV-XIV nach Fig. 13.

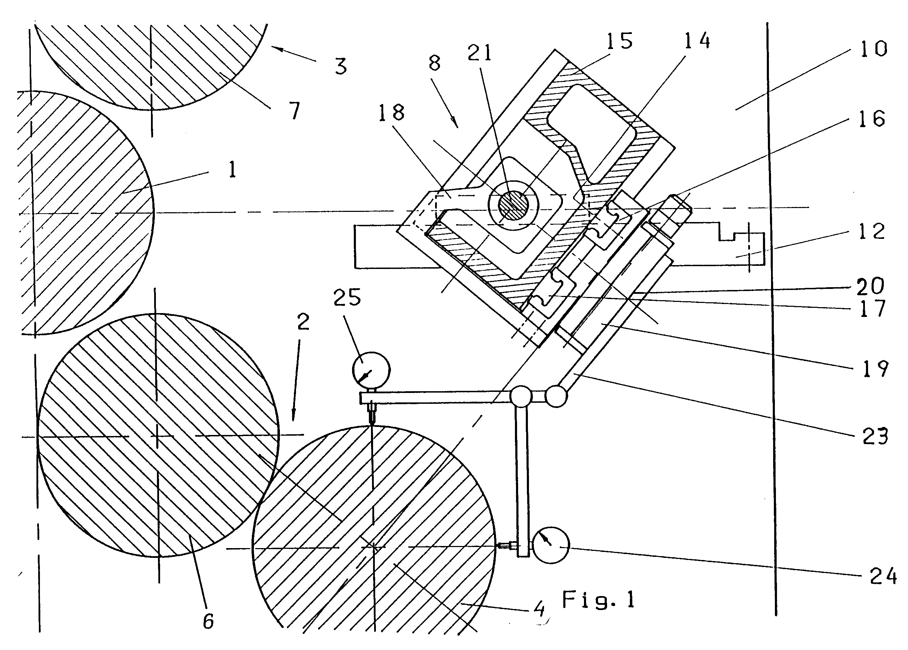

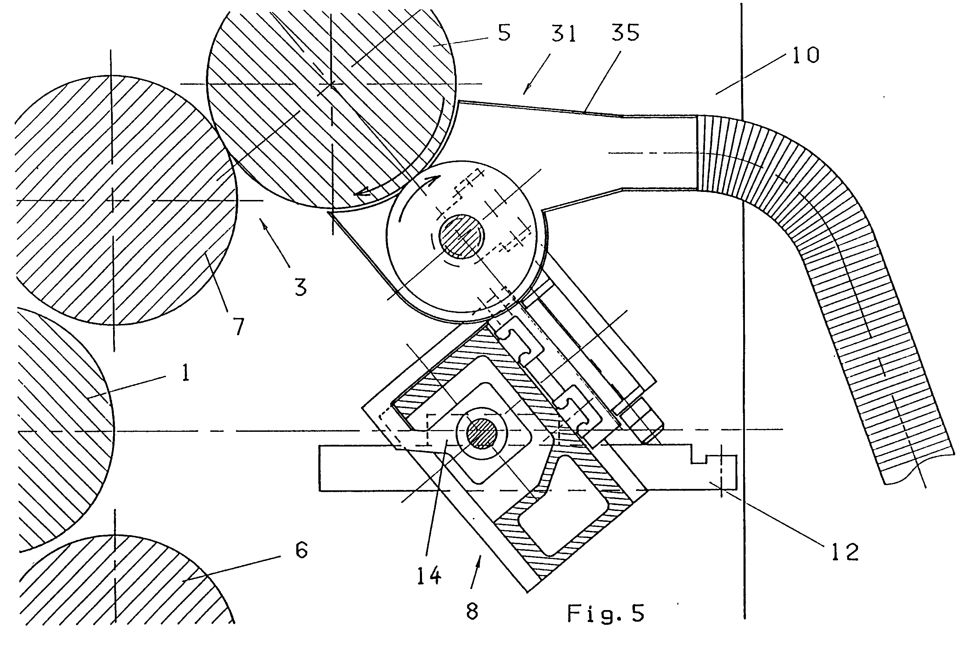

Die Erfindung wird nachfolgend anhand der Reparatur von Formzylindern einer Satellit-Druckeinheit beschrieben. In Fig. 1 ist ein Teil dieser Druckeinheit schematisch in der Seitenansicht im Schnitt dargestellt. Hier ist an einem Satellitzylinder 1 ein unteres und ein oberes Druckwerk 2, 3 angeordnet. Jedes Druckwerk 2, 3 enthält einen Formzylinder 4, 5 und einen Übertragungszylinder 6, 7. Das obere Druckwerk 3 ist gut in Fig. 5 ersichtlich.

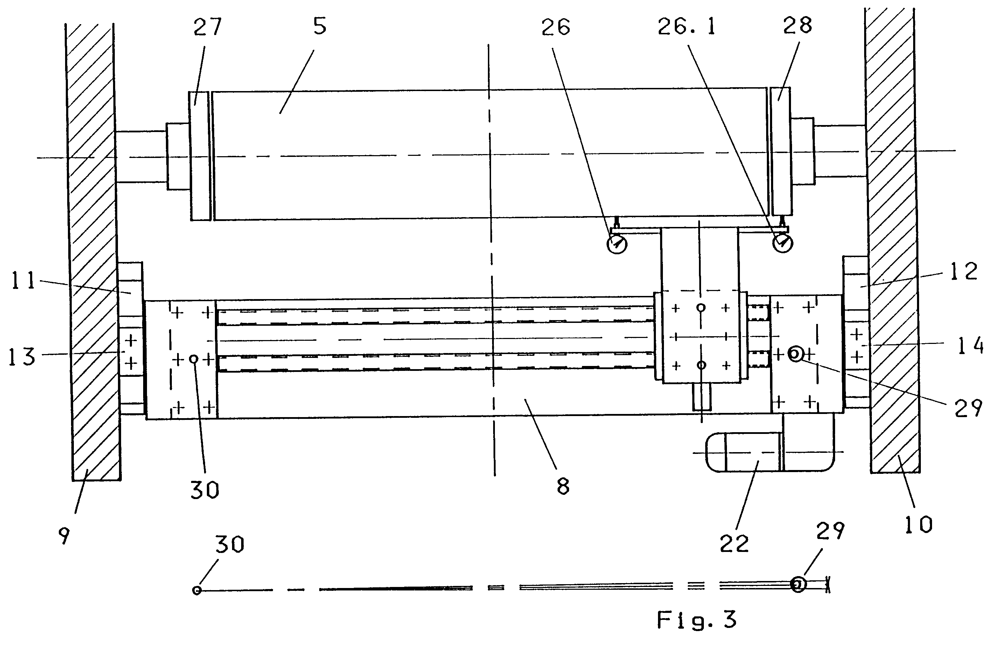

Zwecks Oberflächenreparatur des Formzylinders 4 und/oder 5 durch thermische Spritzbeschichtung wird in die Druckeinheit eine Kreuzschlittentraverse 8 eingesetzt. Hierzu wird an den Innenseiten der Maschinenseitenwände 9, 10 jeweils eine Leiste 11, 12 angeschraubt. Beide Leisten 11, 12 befinden sich in gleicher Höhe und sind zueinander parallel (siehe auch Fig. 3). Auf den Leisten 11, 12 liegt die Kreuzschlittentraverse mit ihren Lagerklötzen 13, 14 auf, und letztere sind mit den Leisten 11, 12 verschraubt.

Die Kreuzschlittentraverse 8 enthält einen Grundkörper 15, der zwei Längsführungen 16, 17 trägt. Auf letzteren ist ein Längssupport 18 verfahrbar, der einen quer zu seiner Bewegungsrichtung schiebbaren Quersupport 19 beherbergt. Letzterer ist mit einem Werkzeugadapter 20 ausgestattet. Der Längssupport 18 steht mit einer Zugspindel 21 in Antriebsverbindung, die von einem Vorschubmotor 22 angetrieben wird. Der Vorschubmotor 22 ist drehzahlstellbar, und die Drehbewegung der Zugspindel 21 wird vorteilhaft beispielsweise mittels eines Kugellagerreibradgetriebes in eine Vorschubbewegung des Längssupportes 18 umgesetzt. Mittels Steigungsumkehr dieses Getriebes ist ein Wechsel der Vorschubrichtung möglich. Insgesamt ist also der Längssupport 18 geschwindigkeitsstellbar und richtungsumkehrbar.

Die in die Druckeinheit eingesetzte Kreuzschlittentraverse 8 wird zunächst hinsichtlich ihrer Längssupportachse parallel zur Achse des zu reparierenden Formzylinders 4 bzw. 5 ausgerichtet. Hierzu wird auf den Werkzeugadapter 20 ein Meßuhrenhalter 23 gesetzt, der horizontal und vertikal an den Formzylinder 4 stellbare Meßuhren 24, 25 trägt. Mit diesen Meßuhren 24, 25 erfolgt das Grobausrichten der Kreuzschlittentraverse 8. Anschließend erfolgt die Feinjustage der Kreuzschlittentraverse 8 mittels radial auf den zu reparierenden Zylinder 4 gerichteter, in Bewegungsrichtung des Quersupportes 19 verfahrbarer Meßuhren 26. Die Meßuhren 24 bis 26 sind zueinander beabstandet paarweise angeordnet. So ist beispielsweise in Fig. 3 die Anstellung der in Quersupportrichtung verstellbaren Meßuhren 26 an dem Formzylinder 5 gezeigt für die Feinausrichtung der Kreuzschlittentraverse 8 bezüglich dieses Zylinders. Die Meßuhren 26 werden hierzu zunächst etwa auf Zylindermitte gefahren, sind an den Zylindermantel angestellt und werden auf gleiche Werte, beispielsweise 0, abgeglichen. Anschließend wird nacheinander die linke Meßuhr 26 auf den linken Schmitzring 27 und die rechte Meßuhr 26.1 auf den rechten Schmitzring 28 gefahren. Bei Gleichheit der Anzeigen der auf die Schmitzringe 27, 28 gefahrenen Meßuhren 26, 26.1 besteht Parallelität zwischen den Längsachsen des Formzylinders 5 und der Kreuzschlittentraverse 8. Ist dies nicht der Fall, kann die Kreuzschlittentraverse 8 mittels des Exzenters 29 durch einseitiges Schwenken um den Drehpunkt 30 in Parallelität gebracht werden.

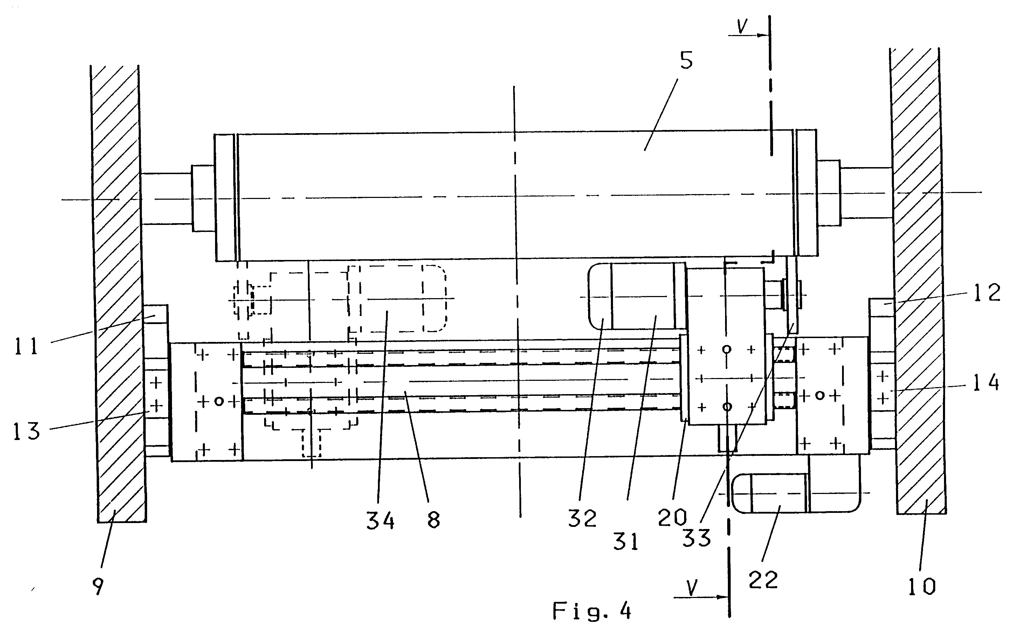

Nach dem lagerichtigen Einbau der Kreuzschlittentraverse 8 in die Druckeinheit erfolgt die Vorbereitung des Zylinders für die thermische Spritzbeschichtung. Für den Fall, daß der Zylinder bereits eine Schicht trägt, sei es eine Metallschicht oder eine keramische Schicht, ist diese Schicht abzuarbeiten. Die Erfindung ermöglicht aber auch die Reparatur von unbeschichteten Zylindern. In diesem Falle ist die Oberfläche so tief abzutragen, daß die Beschädigungen ausgemerzt sind. Zumindest ist der Zylinder in der Dicke der aufzubringenden Beschichtung abzuarbeiten. Bei der in Fig. 4 dargestellten Variante erfolgt das Abarbeiten des Zylindermantels durch Schleifen. Hierzu ist auf dem Werkzeugadapter 20 der Kreuzschlittentraverse 8 eine Schleifvorrichtung 31 montiert. Diese enthält eine von einem Motor 32 angetriebene Schleifscheibe 33, die hinsichtlich Schleiftiefe mittels des Quersupportes 19 an den Formzylinder 5 zustellbar ist. Der Vorschub längs des Formzylinders 5 erfolgt durch Verschieben des Längssupportes 18 mittels der Zugspindel 21. Da wegen räumlicher Beengtheit mit der Schleifvorrichtung 31 nicht die gesamte Zylindermantellänge abgefahren werden kann, wird die nicht erreichbare linksseitige Zylindermantelfläche mit einer in den Werkzeugadapter 20 eingesetzten, zur Schleifvorrichtung 31 spiegelbildlichen Schleifvorrichtung 34 bearbeitet. Dies erübrigt sich, wenn bei mehr Platz zwischen den Seitenwänden der Längssupport einen ausreichenden Verfahrweg hat. Gemäß der Erfindung kann die Kreuzschlittentraverse auch außerhalb der Maschineninnenwände angeordnet werden. Auch hier erübrigt sich dann die zweite Schleifvorrichtung, jedoch ändern sich Aufbau und Befestigung der Kreuzschlittentraverse.

Fig. 5 zeigt die Schleifvorrichtung 31 im Schnitt. Hier ist auch die Absaugung 35 zu erkennen, die die Schleifscheibe 33 umgibt und verhindert, daß Schleifstaub in die Druckmaschine gelangt. Beim Schleifen wird der Formzylinder 5 angetrieben. Dies kann beispielsweise durch den Maschinenantrieb erfolgen oder durch den Waschantrieb des Farbwerkes unter Trennung des Zylinders vom Druckmaschinenantrieb.

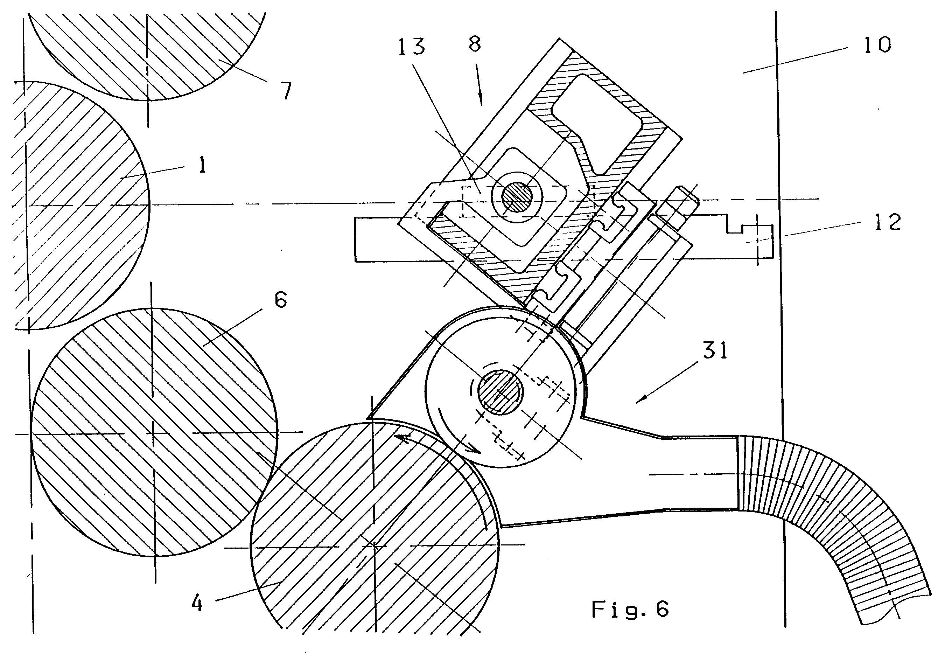

In Fig. 6 ist die Schleifvorrichtung 31 an den unteren Formzylinder 4 angestellt. Dies kann unter Beibehaltung der Anschraubpositionen der Leisten 11 und 12 erfolgen, wenn ihre Anbringung so erfolgt, daß die horizontale Ebene durch die Mitte der auf die Leisten 11, 12 geschraubten quaderförmigen Lagerklötze 13, 14 den gleichen Abstand vom unteren und oberen Formzylinder 4, 5 hat. In diesem Falle braucht zwecks Anstellung der Schleifeinrichtung 31 an den unteren Formzylinder 4 die Kreuzschlittentraverse 8 nur seitenvertauscht und unter Drehung um ihre Längsachse um 180° auf die Leisten 11, 12 aufgelegt zu werden. Selbstverständlich hat dann noch die achsparallele Justage bezüglich des Formzylinders 4 zu erfolgen.

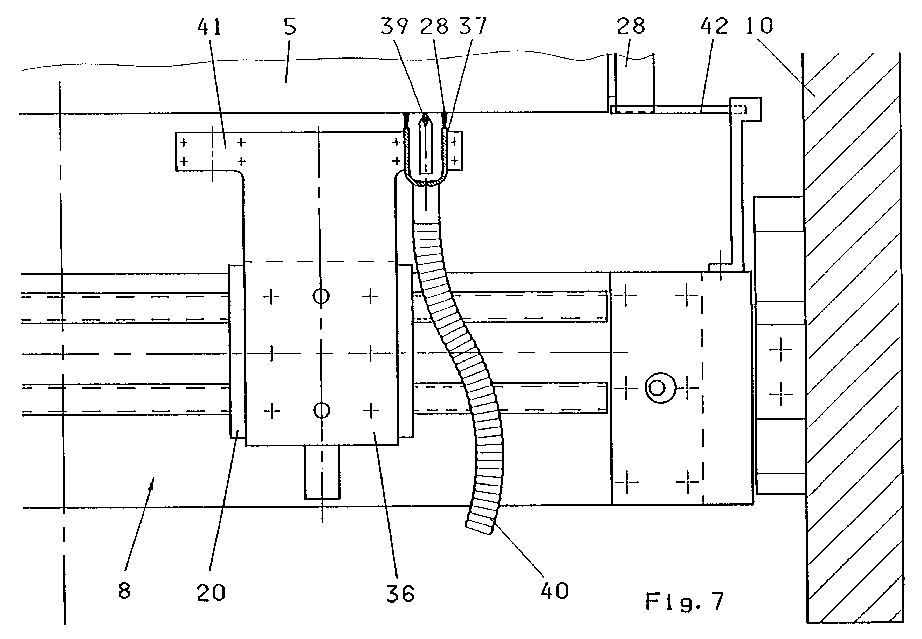

Gemäß Fig. 7 kommt zur Abarbeitung des Formzylinders 5 eine Drehvorrichtung 36 zur Anwendung, die auf dem Werkzeugadapter 20 der Kreuzschlittentraverse 8 befestigt ist. Hier liegt eine Abdeckung 37 mit Bürsten 38, die den Drehmeisel 39 umgibt, am Formzylinder 5 an. An die Abdeckung 37 ist eine Absaugung 40 zur Entfernung des abgearbeiteten Materials angeschlossen. Zur Bearbeitung des mit dem Drehmeisel 39 nicht zu erreichenden linken Teils des Formzylinders 5 ist dieser samt Abdeckung 37 in die linke Aufnahme 41 der Drehvorrichtung 36 umsetzbar. Ansonsten ist die Betriebsweise der Drehvorrichtung analog der Schleifvorrichtung. Gezeigt ist in Fig. 7 weiterhin eine Abdeckung 42, mit der der Schmitzring 28 und durch eine analoge Vorrichtung der Schmitzring 27 während der gesamten Reparatur vor mechanischer und anderweitiger Beschädigung geschützt wird.

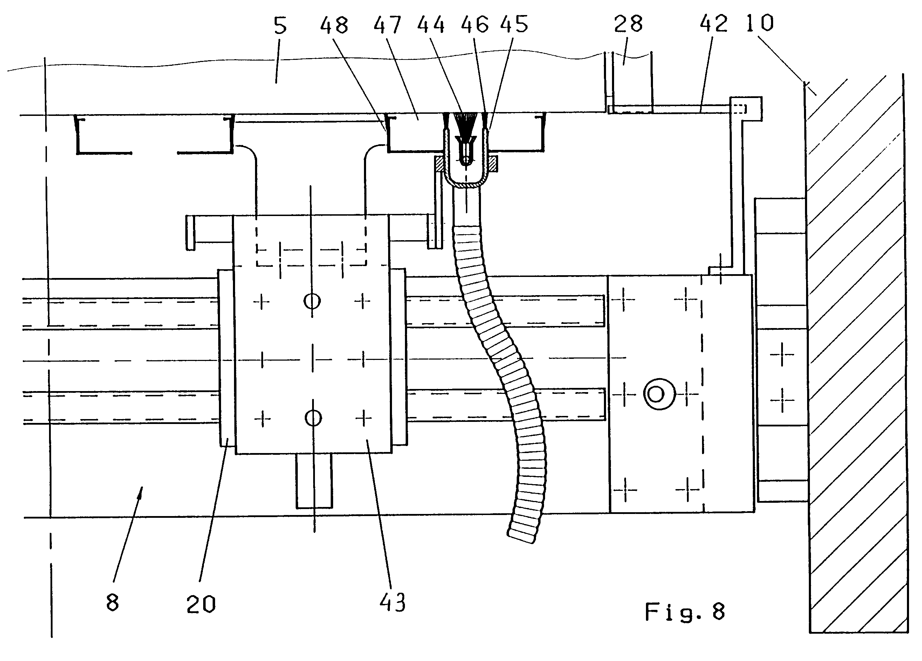

In Fig. 8 kommt zur Bearbeitung des Formzylinders 5 eine abrasive, speziell eine Sandstrahleinrichtung 43 zur Anwendung, die auf den Werkzeugadapter 20 der Kreuzschlittentraverse 8 aufgeschraubt ist. Ihre Strahldüse 44 ist von einer Abdeckung 45, die beispielsweise mit Bürsten 46 zum Zylinder 5 abschließt, umgeben. Die Abdeckung 45 wiederum wird von einer Absaugung 47 umschlossen. Diese liegt mit Bürsten 48 am Formzylinder 5 an. Das Abtragen der Oberfläche erfolgt mittels des Sandstrahles. Ansonsten ist die Arbeitsweise analog der der zuvor beschriebenen Vorrichtungen. Das Strahlen eignet sich besonders zum Abtragen von Schichten. Angewandt könnte auch beispielsweise das Strahlen mit Stahlkies oder das Wasserstrahlen werden.

Das Abtragen der Oberfläche des zu reparierenden Zylinders kann auch durch Fräsen erfolgen. Die entsprechende Vorrichtung ist ähnlich der Schleifvorrichtung 31, jedoch mit dem Unterschied, daß anstelle der Schleifscheibe ein Walzenstirnfräser zum Einsatz kommt.

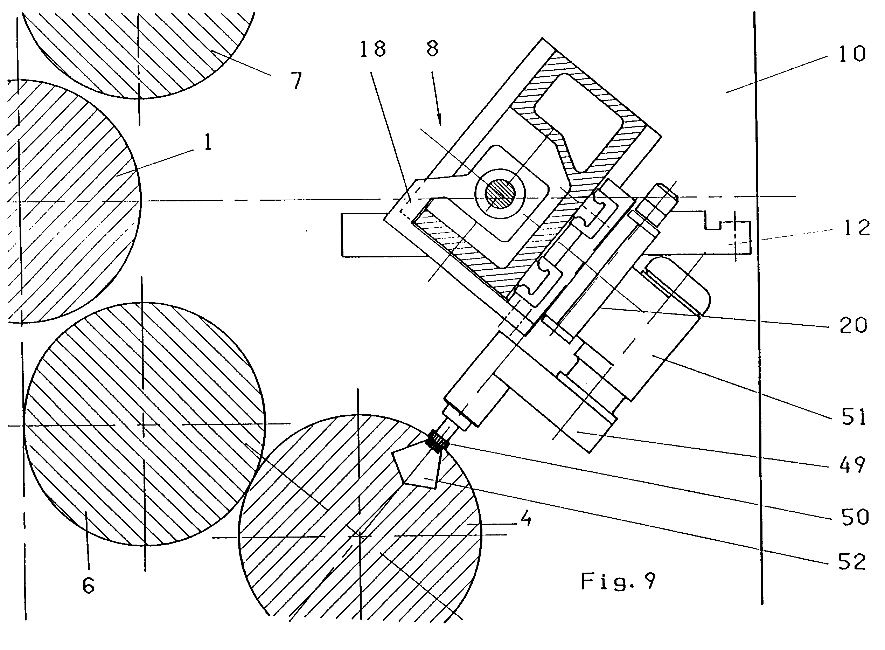

Mit der erfindungsgemäßen Vorrichtung lassen sich im Rahmen der Zylinderreparatur auch vorteilhaft Kanalkanten bearbeiten. Gemäß Fig. 9 ist hierzu auf dem Werkzeugadapter 20 der Kreuzschlittentraverse 8 eine Fräsvorrichtung 49 aufgesetzt, die einen entsprechenden Formfräser 50 samt Antrieb 51 beinhaltet. Der rotierende Formfräser 50 wird mittels des Längssupportes 18 längs der Kanalkanten des Spannkanals 52 verfahren. Auch hier kommt, nicht dargestellt, vorteilhaft eine Absaugung zur Abführung der Frässpäne zur Anwendung. Die Fräsvorrichtung ist an den Formzylinder 4 angestellt gezeigt.

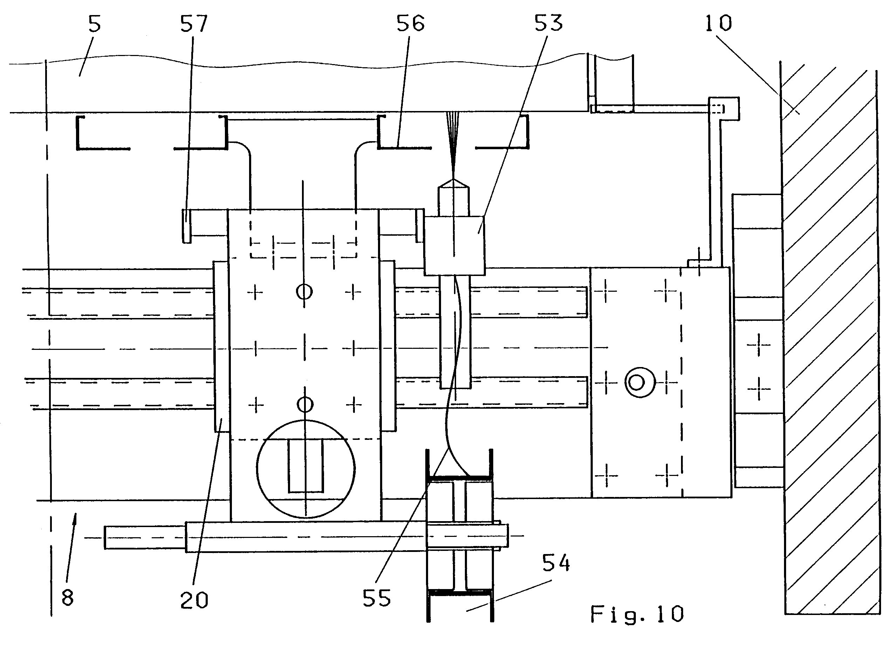

Die Oberfläche des abgearbeiteten Zylinders wird nunmehr entfettet und anschließend durch Strahlen aufgerauht. Für das Strahlen wird vorteilhaft die Sandstrahleinrichtung 43 verwendet. Anschließend wird durch Flammspritzen der Zylinder mit einer neuen Oberflächenschicht versehen. Hierfür wird auf den Werkzeugadapter 20 der Kreuzschlittentraverse 8 eine Spritzpistole 53 aufgesetzt (Fig. 10). Von einer Spule 54 wird der Zusatzwerkstoff abgezogen und der Spritzpistole 53 zugeführt. Im Ausführungsbeispiel soll der Formzylinder 5 mit einer oxidkeramischen Schicht versehen werden, weshalb als Zusatzwerkstoff beispielsweise Aluminiumoxid / Titandioxid zur Anwendung kommt. Der zu reparierende Zylinder könnte aber auch mit einer metallkeramischen (cermet) Schicht oder lediglich einer Metallschicht versehen werden. Als Zusatzwerkstoff für eine metallkeramische Beschichtung eignet sich z.B. ein Gemisch aus Chromkarbid, Chromnickellegierungen und Molybdänpulver, während eine Metallschicht vorteilhaft mit einer Nickel-Basis-Legierung gespritzt wird. Bei der oxidkeramischen Beschichtung wird zunächst eine derartige Metallschicht als Haftschicht aufgetragen, ehe die keramische Deckschicht aufgespritzt wird. Sämtliche dieser Beschichtungen können im Dünn- oder Dickschichtverfahren aufgetragen werden, wobei beim Dickschichtverfahren mehrlagig gespritzt wird. Gängige Schichtdicken liegen beim Dünnschichtverfahren (einlagige Maßbeschichtungen) für die Haft- und Deckschicht im Bereich von jeweils wenigen Mikrometern bis ca. 150 Mikrometern. Beim Dickschichtverfahren betragen die Dicken der aufzubringenden Schichten bis zu mehrere Zehntel bis einige Millimeter. Vor dem Auftragen beider Schichten wird der Formzylinder 5 vorgewärmt, vorteilhaft mittels der Spritzpistole 53. Mit dem Vorwärmen wird gleichzeitig ein Säuberungseffekt auf der Zylinderoberfläche erzielt. Der Aktionsbereich der Spritzpistole 53 ist von einer Abdeckung 56 umgeben, an die eine nicht dargestellte Absaugung angeschlossen ist.

Wie bei den oben beschriebenen Vorrichtungen zur Zyinderbearbeitung ist die Spritzpistole 53 zur Bearbeitung des linksseitigen Teils des Zylindermantels in eine weitere Halterung 57 umsteckbar. Der Spritzpistole 53 werden zum Betrieb an nicht dargestellten Anschlüssen Luft, Sauerstoff und Brenngas, beispielsweise Acetylen, zugeführt. Der auf dem Formzylinder 5 erzielte Schichtdickenzuwachs ist abhängig von der Umfangsgeschwindigkeit des Zylinders 5, der Geschwindigkeit des Längssupports 18 und der Zufuhrgeschwindigkeit des Zusatzwerkstoffes 55. Vorteilhafte Bereiche sind für die Umfangsgeschwindigkeit des Zylinders 20 bis 80 m/min, für den Zusatzwerkstoffvorschub 10 bis 200 cm/min und für die Längssupportgeschwindigkeit 10 bis 80 mm/min. Bei dem im Ausführungsbeispiel angewandten Dünnschichtverfahren ist außer dem Versiegeln der Schicht nur noch deren Glätten erforderlich. Beim auch zum Schutzumfang des Patentes gehörenden Dickschichtverfahren wird die dickere aufgetragene Schicht durch Schleifen auf den Fertigdurchmesser gebracht und dabei gleichzeitig geglättet. Die Messung der Durchmesser erfolgt vorteilhaft mittels eines Reitermeßgerätes. Die aufgebrachte Schichtdicke kann im Falle der Beschichtung von Zylindern, die Gruben aufweisen, an den dann vorteilhaft zur Anwendung kommenden Abdeckungen für die Gruben gemessen werden.

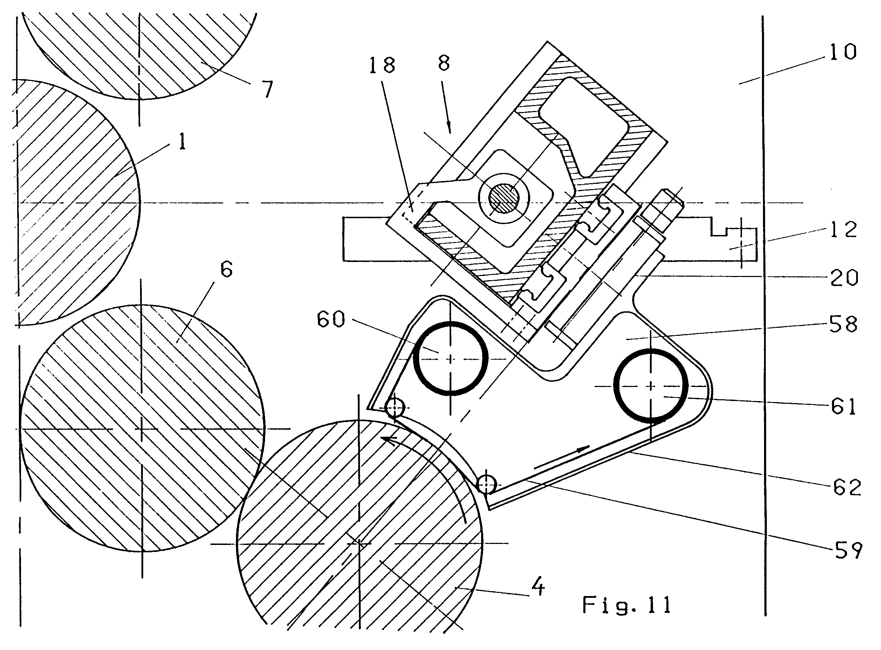

Fig. 11 zeigt eine Glättvorrichtung 58, angestellt an den Formzylinder 4, mit der die aufgebrachte Spritzschicht geglättet wird. Die Glätteinrichtung 58 ist auf dem Werkzeugadapter 20 der Kreuzschlittentraverse 8 montiert und mittels des Längssupports 18 entlang dem sich drehenden Formzylinder 4 verfahrbar. Sie glättet dabei mittels eines am Zylindermantel anliegenden Glättbandes 59 die Spritzschicht, indem deren Oberflächenspitzen abgetragen werden. Das Glättband 59 wird hierbei durch langsames Umwickeln von einer Vorratsspule 60 zu einer Abfallspule 61 ständig erneuert. Das Glättband 59 ist von einer Abdeckung 62 umgeben, an die, nicht dargestellt, eine Absaugung angeschlossen ist.

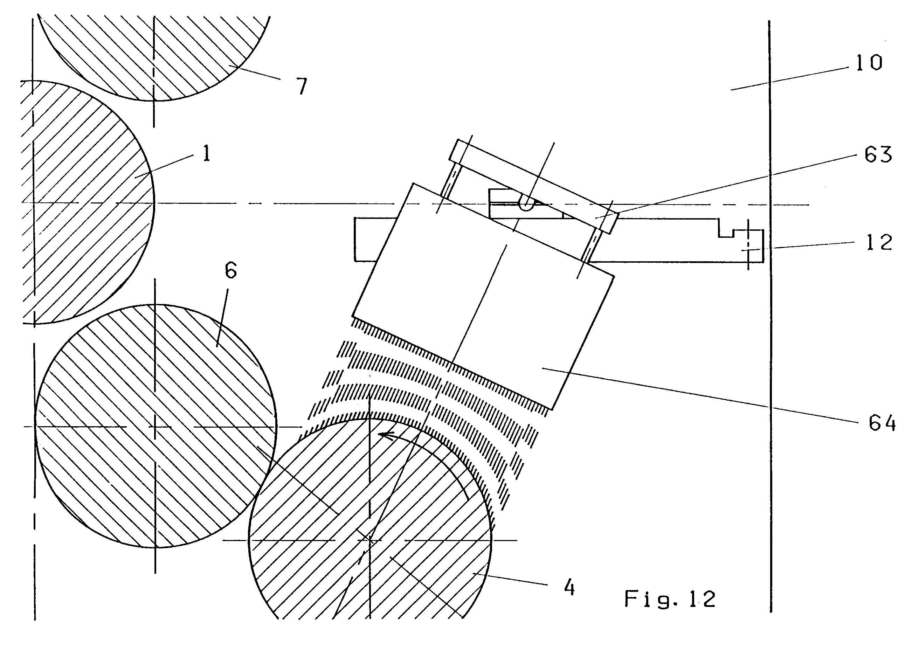

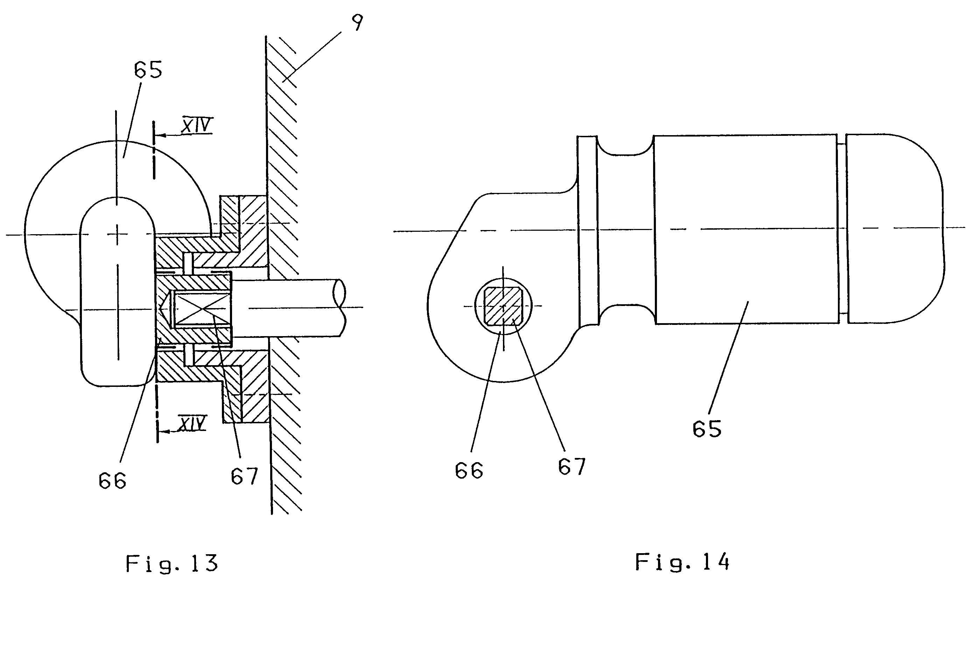

Nach dem Glätten wird die aufgebrachte Schicht versiegelt. Hierzu wird von Hand ein Versiegler, beispielsweise ein anaerob aushärtender, aufgetragen. Der aufgetragene Versiegler wird zur Verstärkung der Aushärtung mit UV-Licht ausgehärtet. Hierzu wird nach Ausbau der Kreuzschlittentraverse 8 auf die Leisten 11, 12 eine Traverse 63 montiert, die UV-Lampen trägt (Fig. 12). Im Verlaufe von ca. einer Stunde UV-Bestrahlung bei langsamer Drehung des Formzylinders 4 härtet der Versiegler reproduzierbar aus. Einen stark ins Langsame übersetztenden Antrieb für diesen Arbeitsgang zeigt Fig. 13. Hier ist ein Getriebemotor 65 mit seinem ein Innenvierkant aufweisenden Abtriebszapfen 66 auf das Vierkant des Handantriebs des Formzylinders aufgesteckt. Fig. 14 zeigt die Ansicht auf den Getriebemotor 65.

Vorteilhaft kommt für die einzelnen elektrischen Antriebe eine zentrale Steuerung zur Anwendung. Es sind dann mit dieser der Waschantrieb, der Getriebemotor am Handantrieb, der Schleifmotor, der Längssupportmotor und diverse Sensoren, wie Meßwert- und Stellungsgeber, verbunden.

Bei den Ausführungsbeispielen kam zur Zylinderbeschichtung das Flammspritzen zur Anwendung. Die Beschichtung kann unter Benutzung der Erfindung auch durch andere thermische Spritzverfahren, beispielsweise durch Plasmaspritzen, Hochgeschwindigkeitsflammspritzen oder Lichtbogenspritzen oder aber auch durch Laserspritzen erfolgen. Weiterhin können vermittels der Erfindung auch lediglich Teile des Zylindermantels erneuert werden, und zur Reparatur eignen sich nicht nur Formzylinder, sondern auch andere Zylinder von Druckmaschinen, beispielsweise Druckzylinder.

## Patentansprüche

1. Verfahren zur Reparatur von Zylindern von Druckmaschinen, insbesondere von Formzylindern (4, 5), durch thermische Spritzbeschichtung im in der Druckmaschine eingebauten Zustand mit den Schritten
- Einbau einer Kreuzschlittentraverse (8) in die Druckmaschine parallel zum zu reparierenden Zylinder (4, 5)
- Abarbeiten des Zylindermantels auf einen Grunddurchmesser
- Entfetten der Zylinderoberfläche
- Strahlen der Zylinderoberfläche
- Vorwärmen der Zylinderoberfläche
- Thermisches Spritzen einer Beschichtung
- Glätten der Schicht
- Versiegeln der Schicht.

2. Verfahren nach Anspruch 1, dadurch gekennzeichnet, daß die gesamte Zylindermantelfläche erneuert wird.

3. Verfahren nach Anspruch 1, dadurch gekennzeichnet, daß die schadhaften Stellen des Zylindermantels erneuert werden.

4. Verfahren nach einem der Ansprüche 1 bis 3, dadurch gekennzeichnet, daß der Zylinder (4, 5) durch Drehen abgearbeitet wird.

5. Verfahren nach einem der Ansprüche 1 bis 3, dadurch gekennzeichnet, daß der Zylinder (4, 5) durch abrasive Strahlverfahren abgearbeitet wird.

6. Verfahren nach einem der Ansprüche 1 bis 3, dadurch gekennzeichnet, daß der Zylinder (4, 5) durch Schleifen abgearbeitet wird.

7. Verfahren nach einem der Ansprüche 1 bis 3, dadurch gekennzeichnet, daß der Zylinder (4, 5) durch Fräsen abgearbeitet wird.

8. Verfahren nach einem der vorangehenden Ansprüche, dadurch gekennzeichnet, daß der Zylinder (4, 5) um das Maß der vorzunehmenden Beschichtung abgearbeitet wird.

9. Verfahren nach einem der vorangehenden Ansprüche, dadurch gekennzeichnet, daß an dem Zylinder (4, 5) alte Beschichtungen entfernt werden.

10. Verfahren nach Anspruch 9, dadurch gekennzeichnet, daß die Beschichtungen im Wasserstrahlverfahren entfernt werden.

11. Verfahren nach einem der vorangehenden Ansprüche, dadurch gekennzeichnet, daß die Beschichtung durch Flammspritzen erfolgt.

12. Verfahren nach einem der Ansprüche 1 bis 10, dadurch gekennzeichnet, daß die Beschichtung durch Plasmaspritzen erfolgt.

13. Verfahren nach einem der Ansprüche 1 bis 10, dadurch gekennzeichnet, daß die Beschichtung durch Hochgeschwindigkeitsflammspritzen erfolgt.

14. Verfahren nach einem der vorangehenden Ansprüche, dadurch gekennzeichnet, daß der Zylinder (4, 5) im Dünnschichtverfahren beschichtet und anschließend geglättet wird.

15. Verfahren nach einem der Ansprüche 1 bis 13, dadurch gekennzeichnet, daß der Zylinder (4, 5) im Dickschichtverfahren beschichtet und anschließend auf Fertigmaß geschliffen und dabei gleichzeitig geglättet wird.

16. Vorrichtung zur Reparatur von Zylindern von Druckmaschinen, insbesondere von Formzylindern, durch thermische Spritzbeschichtung, dadurch gekennzeichnet, daß parallel zur Achse des zu reparierenden Zylinders (4, 5) an den Maschinenseitenwänden der Druckmaschine (9, 10) eine Kreuzschlittentraverse (8) mit einem Längs- und einem Quersupport (18, 19) installiert ist, der Längssupport (18) mit einer Zugspindel (21) in Eingriff steht, der Quersupport (19) einen Werkzeugadapter (20) trägt, auf dem wahlweise Werkzeuge zur Reparatur des Zylinders (4, 5) angebracht sind, und der Zylinder (4, 5) mit einem Antrieb (65) in Antriebsverbindung steht.

17. Vorrichtung nach Anspruch 16, dadurch gekennzeichnet, daß die Kreuzschlittentraverse (8) auf an den Innenseiten der Maschinenseitenwände (9, 10) befestigten Leisten (11, 12) lagert.

18. Vorrichtung nach Anspruch 17, dadurch gekennzeichnet, daß bei einer Anordnung der Leisten (11, 12) sowohl ein oberer (5) als auch nach Drehung der Kreuzschlittentraverse (8) um ihre Längsachse und eine senkrechte Achse um jeweils 180° ein unterer Zylinder (4) bearbeitbar ist.

19. Vorrichtung nach einem der Ansprüche 16 bis 18, dadurch gekennzeichnet, daß die Kreuzschlittentraverse (8) zur Justierung in der Nähe einer Gestellaufnahme einen in Richtung des Quersupportes (19) wirkenden Exzenter (29) aufweist.

20. Vorrichtung nach einem der Ansprüche 16 bis 19, dadurch gekennzeichnet, daß der Längssupport (18) geschwindigkeitsstellbar und richtungsumkehrbar bewegbar ist.

21. Vorrichtung nach einem der Ansprüche 16 bis 20, dadurch gekennzeichnet, daß der Werkzeugadapter (20) wahlweise eine Schleifvorrichtung (31, 34), eine Drehvorrichtung (36), eine Strahleinrichtung (43), eine Fräsvorrichtung, eine Spritzpistole (51) für thermische Spritzbeschichtung oder eine Glättvorrichtung (58) trägt.

22. Vorrichtung nach Anspruch 21, dadurch gekennzeichnet, daß das Werkzeug (33, 39, 44, 53, 59) von einer Absaugung (35, 40, 47) umgeben ist.

23. Vorrichtung nach einem der Ansprüche 16 bis 22, dadurch gekennzeichnet, daß die Schmitzringe (27, 28) des Zylinders (4, 5) mit je einer Abdeckung (42) versehen sind.

24. Vorrichtung nach einem der Ansprüche 16 bis 23, dadurch gekennzeichnet, daß jeder Spannkanal (52) mit einer Abdeckung versehen ist.

25. Vorrichtung nach einem der Ansprüche 16 bis 24, dadurch gekennzeichnet, daß der Zylinder (4, 5) mit dem Antrieb der Druckmaschine in Verbindung steht.

26. Vorrichtung nach einem der Ansprüche 16 bis 24, dadurch gekennzeichnet, daß der Zylinder (4, 5) unter Trennung vom Antrieb der Druckmaschine mit einem anderweitigen Antrieb (65) in Antriebsverbindung steht.

## Claims

1. Process for repairing cylinders of printing machines, particularly forme cylinders (4, 5), by means of thermal spray coating incorporated in the printing machine with the steps
- assembly of a cross slide traverse (8) in the printing machine parallel to the cylinder (4, 5) to be repaired
- machining-off of the cylinder sleeve to a base diameter
- degreasing of the cylinder surface
- blasting of the cylinder surface
- preheating of the cylinder surface
- thermal spraying of a coating
- smoothing of the film
- sealing of the film.

2. Process according to claim 1, characterised in that the whole cylinder sleeve surface is restored.

3. Process according to claim 1, characterised in that the damaged parts of the cylinder sleeve are restored.

4. Process according to one of claims 1 to 3, characterised in that the cylinder (4, 5) is worked off by turning.

5. Process according to one of claims 1 to 3, characterised in that the cylinder (4, 5) is worked off by means of an abrasive blasting process.

6. Process according to one of claims 1 to 3, characterised in that the cylinder (4, 5) is worked off by means of grinding.

7. Process according to one of claims 1 to 3, characterised in that the cylinder (4, 5) is worked off by means of milling.

8. Process according to one of the preceding claims, characterised in that the cylinder (4, 5) is worked off by the size of the coating to be carried out.

9. Process according to one of the preceding claims, characterised in that old coatings on the cylinder (4, 5) are removed.

10. Process according to claim 9, characterised in that the coatings are removed by the water jet process.

11. Process according to one of the previous claims, characterised in that the coating is carried out by means of flame-spraying.

12. Process according to one of claims 1 to 10, characterised in that the coating is carried out by means of plasma spraying.

13. Process according to one of claims 1 to 10, characterised in that the coating is carried out by means of high-speed flame-spraying.

14. Process according to one of the previous claims, characterised in that the cylinder (4, 5) is coated in a thin film process and subsequently smoothed.

15. Process according to one of claims 1 to 13, characterised in that the cylinder (4, 5) is coated in a thick film process and subsequently ground to size and in the process simultaneously smoothed.

16. Device for repairing cylinders of printing machines, particularly forme cylinders, by means of thermal spray coating, characterised in that a cross slide traverse (8) with a longitudinal and a transverse support (18, 19) is installed parallel to the axis of the cylinder (4, 5) to be repaired on the machine side walls (9, 10) of the printing machine, the longitudinal support (18) being in engagement with a draw spindle (21), the transverse support (19) carrying a tool adaptor (20), on which alternative tools for repairing the cylinder (4, 5) are applied, and the cylinder (4, 5) is in operational connection with a drive (65).

17. Device according to claim 16, characterised in that the cross slide traverse (8) rests on ledges (11, 12) secured on the inner sides of the machine side walls (9, 10).

18. Device according to claim 17, characterised in that in an arrangement of the ledges (11, 12) an upper cylinder (5) can be processed, as can a lower cylinder (4), after rotating the cross slide traverse (8) 180° around its longitudinal axis and a perpendicular axis.

19. Device according to one of claims 16 to 18, characterised in that for adjustment the cross slide traverse (8) has an eccentric (29) in the region of one frame receptor effective in the direction of the transverse support (19).

20. Device according to one of claims 16 to 19, characterised in that the longitudinal support (18) is movable for adjusting the speed and reversing the direction.

21. Device according to one of claims 16 to 20, characterised in that the tool adaptor (20) alternatively has a grinding device (31, 34), a rotating device (36), a blasting device (43), a milling device, a spray gun (51) for thermal spray coating or a smoothing device (58).

22. Device according to claim 21, characterised in that the tool (33, 39, 44, 53, 59) is surrounded by an extractor (35, 40, 47).

23. Device according to one of the claims 16 to 22, characterised in that the bearer rings (27, 28) of the cylinder (4, 5) are each provided with a cover 42.

24. Device according to one of claims 16 to 23, characterised in that each cylinder gap (52) is provided with a cover.

25. Device according to one of claims 16 to 24, characterised in that the cylinder (4, 5) is in connection with the drive unit of the printing machine.

26. Device according to one of claims 16 to 24, characterised in that the cylinder (4, 5) is separated from the drive unit of the printing machine and is in drive connection with a different drive unit (65).

## Revendications

1. Procédé pour la réparation de cylindres de machines d'impression, en particulier de cylindres porte-clichés (4, 5), par revêtement par projection à chaud, tels qu'ils sont montés dans la machine d'impression, comprenant les étapes
- de montage d'une traverse à chariot à mouvements croisés (8) dans la machine d'impression, parallèlement au cylindre à réparer (4, 5),
- d'enlèvement de matière de la table du cylindre pour l'amener à un diamètre de base,
- de dégraissage de la surface du cylindre
- de projection sur la surface du cylindre
- de préchauffage de la surface du cylindre,
- de projection d'un revêtement à chaud,
- de polissage de la couche,
- de scellement de la couche.

2. Procédé selon la revendication 1, caractérisé en ce que la totalité de la surface de la table du cylindre est rénovée.

3. Procédé selon la revendication 1, caractérisé en ce que les zones détériorées de la table du cylindre sont rénovées.

4. Procédé selon l'une des revendications 1 à 3, caractérisé en ce que l'enlèvement de matière du cylindre (4, 5) est effectué par tournage.

5. Procédé selon l'une des revendications 1 à 3, caractérisé en ce que l'enlèvement de matière du cylindre (4, 5) est effectué par un procédé de projection d'abrasif.

6. Procédé selon l'une des revendications 1 à 3, caractérisé en ce que l'enlèvement de matière du cylindre (4, 5) est effectué par rectification.

7. Procédé selon l'une des revendications 1 à 3, caractérisé en ce que l'enlèvement de matière du cylindre (4, 5) est effectué par fraisage.

8. Procédé selon l'une des revendications qui précèdent, caractérisé en ce que l'enlèvement de matière du cylindre (4, 5) est effectué dans la proportion du revêtement à réaliser.

9. Procédé selon l'une des revendications qui précèdent, caractérisé en ce que les anciens revêtements du cylindre (4, 5) sont éliminés.

10. Procédé selon la revendication 9, caractérisé en ce que les revêtements sont éliminés par le procédé par projection d'eau.

11. Procédé selon l'une des revendications qui précèdent, caractérisé en ce que le revêtement est réalisé par métallisation au pistolet.

12. Procédé selon l'une des revendications 1 à 10, caractérisé en ce que le revêtement est réalisé par projection de plasma.

13. Procédé selon l'une des revendications 1 à 10, caractérisé en ce que le revêtement est réalisé par métallisation au pistolet à grande vitesse.

14. Procédé selon l'une des revendications qui précèdent, caractérisé en ce que le cylindre (4, 5) est revêtu par le procédé en couche mince et ensuite est poli.

15. Procédé selon l'une des revendications 1 à 13, caractérisé en ce que le cylindre (4, 5) est revêtu par le procédé en couche épaisse et ensuite est amené à sa cote finie par rectification et en même temps poli.

16. Dispositif pour la réparation de cylindres de machines d'impression, notamment de cylindres porteclichés, par revêtement par projection à chaud, caractérisé en ce que parallèlement à l'axe du cylindre (4, 5) à réparer, sur les parois latérales (9, 10) de la machine d'impression, est installée une traverse à chariot à mouvements croisés (8), munie d'un support longitudinal et transversal (18, 19), que le support longitudinal (18) est en prise avec une broche de chariotage (21), que le support transversal (19) porte un adaptateur d'outil (20), sur lequel sont montés des outils au choix pour la réparation du cylindre (4, 5) et que le cylindre (4, 5) est en liaison d'entraînement avec une transmission (65).

17. Dispositif selon la revendication 16, caractérisé en ce que la traverse à chariot à mouvements croisés (8) repose sur des barres (11, 12) fixées sur les côtés intérieurs des parois latérales (9, 10) de la machine.

18. Dispositif selon la revendication 17, caractérisé en ce que, pour une disposition des barres (11, 12), aussi bien un cylindre supérieur (5), qu'après la rotation de la traverse à chariot à mouvements croisés (8) sur son axe longitudinal et un axe vertical de respectivement 180°, un cylindre inférieur (4) est usinable.

19. Dispositif selon l'une des revendications 16 à 18, caractérisé en ce que la traverse à chariot à mouvements croisés (8) présente à des fins de réglage au voisinage d'une portée de châssis, un excentrique (29) agissant dans le sens du support transversal (19).

20. Dispositif selon l'une des revendications 16 à 19, caractérisé en ce que le support longitudinal (18) peut être déplacé avec la possibilité de régler sa vitesse et d'inverser son sens de déplacement.

21. Dispositif selon l'une des revendications 16 à 20, caractérisé en ce que l'adaptateur d'outil 20 porte, au choix, un dispositif de rectification (31, 34), un dispositif de tournage (36), un dispositif de projection (43), un dispositif de fraisage, un pistolet de projection (51) pour revêtement par projection à chaud ou un dispositif de polissage (58).

22. Dispositif selon la revendication 21, caractérisé en ce que l'outil (33, 39, 44, 53, 59) est entouré par un dispositif d'aspiration (35, 40, 47).

23. Dispositif selon l'une des revendications 16 à 22, caractérisé en ce que les tourillons d'extrémité (27, 28) du cylindre (4, 5) sont respectivement munis d'une enceinte de recouvrement (42).

24. Dispositif selon l'une des revendications 16 à 23, caractérisé en ce que chaque canal de bridage (52) est muni d'une enceinte de recouvrement.

25. Dispositif selon l'une des revendications 16 à 24, caractérisé en ce que le cylindre (4, 5) est relié à la transmission de la machine d'impression.

26. Dispositif selon l'une des revendications 16 à 24, caractérisé en ce que le cylindre (4, 5), désaccouplé de la transmission de la machine d'impression, est en liaison d'entraînement avec une autre transmission (65).
